# EUROPÄISCHE PATENTSCHRIFT

(11) **EP 0 887 036 B1**
(45) Veröffentlichungstag und Bekanntmachung des Hinweises auf die Patenterteilung: **15.11.2000**
(21) Anmeldenummer: 98810521.9
(22) Anmeldetag: 09.06.1998
(51) Int. Cl.: A47J 31/06

(54) **Mit Filterkapsel arbeitende Espressomaschine**
Espresso coffee machine functioning with filter packages
Machine à café espresso utilisant des capsules filtrantes

(30) Priorität: 27.06.1997 CH 155597
(43) Veröffentlichungstag der Anmeldung: 30.12.1998
(73) Patentinhaber: ELDOM ROTHRIST AG, CH-4852 Rothrist (CH)
(72) Erfinder: Ruckstuhl, Stephan, 4623 Neuendorf (CH)
(74) Vertreter: Hug Interlizenz AG

(56) Entgegenhaltungen:
- EP-A- 0 555 775
- DE-C- 4 338 629
- US-A- 2 778 739

## Beschreibung

### TECHNISCHES GEBIET

Die vorliegende Erfindung betrifft eine Espressomaschine, welche mit Filterkapseln arbeitet und bei welcher eine Brüheinheit mit zwei relativ zueinander verfahrbaren Brühkammerteilen vorgesehen ist, die in einer Schliessstellung eine Brühkammer für die Filterkapseln bilden und wobei einer der beiden Brühkammerteile mit einem Brühwassererhitzer verbunden und mit einer Brause versehen ist.

Die Filterkapseln enthalten das für die Zubereitung einer Portion Kaffee (z.B. einer Tasse) benötigte Kaffeepulver. Sie sind gebrauchsfertig vorkonfektioniert und einzeln in einer aromadichten Umhüllung verpackt.

Zur Kaffeezubereitung wird eine Filterkapsel nach Entfernen der Umhüllung durch einen Schlitz im Maschinengehäuse von oben in die Espressomaschine eingeworfen, wo sie durch geeignete Mittel zwischen den beiden Brühkammerteilen in ihrer geöffneten Stellung gefangen wird. Die beiden Brühkammerteile werden sodann in ihre Schliesstellung gefahren, in welcher sie die Filterkapsel zwischen sich einschliessen und nach aussen abdichten. In dieser Stellung wird eine definierte Menge Brühwasser durch die Brühkammer und durch die darin enthaltene Filterkapsel gepresst. Der hierbei entstehende Kaffee wird über ein Auslaufrohr in eine zuvor bereitgestellte Tasse geleitet. Nach Abschluss des Brühvorgangs werden die Brühkammerteile wieder auseinandergefahren, wodurch die Filterkapsel weiter nach unten in einen dort bereitgestellten Auffangbehälter fallen kann.

### STAND DER TECHNIK

Espressomaschinen des vorbeschriebenen Typs sind bekannt und auf dem Markt erhältlich. Nachteilig bei den bislang bekannten Maschinen ist, dass sie nur mit einem speziellen, auf sie abgestimmten Kapseltyp mit definierter Grösse und vor allem auch Dicke zuverlässig funktionieren. Zumindest gewisse Dickenvariationen wären aber zwecks Variation der Kaffeepulvermenge und damit der gewünschten Stärke des hergestellten Kaffees wünschenswert.

Kaffeemaschinen der beschrieben Art lassen sich zumeist auch für die Zubereitung von Heissdampf verwenden, wobei der Wassererhitzer zur Heissdampfbereitung auf eine höhere Temperatur als für die Kaffeezubereitung gebracht wird. Bei der Umschaltung von der Dampf- auf die Kaffezubereitung treten bei den bekannten Maschinen jedoch Probleme auf: Wenn nach der Dampfentnahme sofort, d.h. ohne abzuwarten, bis die reduzierte Kaffeetemperatur erreicht ist, Kaffee zubereitet wird, wird die Filterkapsel anfänglich mit noch im Durchlauferhitzer befindlichem, sehr heissem und unter hohem Druck stehenden Dampf beaufschlagt. Hierbei kann es vorkommen, dass die Filterkapsel sich aufbläht und sogar regelrecht explodiert, wodurch der gesamte Brühraum verschmutzt wird und gereinigt werden muss.

Aus der DE-C-4338629 ist eine Kaffeemaschine mit den eingangs genannten Merkmalen bekannt, bei welcher zusätzlich die Brause in dem ersten Brühkammerteil beweglich und während der Kaffeezubereitung mit einer Kraft in Richtung des anderen Brühkammerteils bzw. der in der Brühkammer aufgenommenen Filterkapsel beaufschlagt ist. Die bewegliche angeordnete Brause ist hierbei Teil einer Ventilanordnung für die Zufuhr des Brühwassers. Beim Schliessen der beiden Brühkammerteile um eine Filterkapsel kommt die bewegliche Brause mit einem an ihr vorstehenden Rand mit der Filterkapsel in Berührung und wird durch die Filterkapsel entgegen der Wirkung einer Feder in den ersten Brühkammerteil hineingedrückt, wodurch die Ventilöffnung der Ventilanordnung für die Zufuhr des Brühwassers geöffnet wird. Eine Verwendung unterschiedlicher Filterkapseln oder eine Heissdampfbeaufschlagung der Filterkapseln wird in der DE-C-4338629 nicht erwähnt.

### DARSTELLUNG DER ERFINDUNG

Es ist Aufgabe der Erfindung anzugeben, wie die mit der Verwendung unterschiedlicher Filterkapseln sowie die mit einer Heissdampfbeaufschlagung der Filterkapseln verbundenen Probleme vermieden werden können.

Diese Aufgabe wird erfindungsgemäss gelöst durch eine Espressomaschine, wie sie in Anspruch 1 gekennzeichnet ist. Die erfindungsgemässe Lösung besteht demnach bei einer Maschine der eingang genannten Art darin, dass die Brause in dem genannten Brühkammerteil beweglich angeordnet und zumindest während der Kaffeezubereitung mit einer Kraft in Richtung des anderen Brühkammerteils bzw. der in der Brühkammer enthaltenen Filterkapsel beaufschlagt wird und dass die Brause während der Kaffeezubereitung flächig an der Filterkapsel anliegt.

Ein durch die Erfindung erreichter Vorteil besteht zunächst darin, dass die Filterkapsel durch das Anpressen der Brause verdichtet und die Durchlaufgeschwindigkeit des Brühwassers vermindert wird. Die Extraktionswerte werden dadurch verbessert.

Durch die flexible Brühkammer kann die Kaffeepulvermenge in der Filterkapsel variiert werden, wobei die Dicke der Filterkapsel gegenüber der derzeit üblichen Dicke ohne weiteres um 2-3 mm variieren kann.

Durch die unter Druck stehende Brause kann sich die Filterkapsel, wenn sie unmittelbar nach einer Heissdampfbereitung mit heissem Dampf beaufschlagt wird, nicht mehr aufblähen und explodieren.

Bevorzugte Ausgestaltungen der Erfindung sind in den abhängigen Ansprüchen gekennzeichnet. Danach kann die auf die Brause einwirkende Karft durch eine Feder und/oder hydraulisch während der Kaffeezubereitung aufgebracht werden.

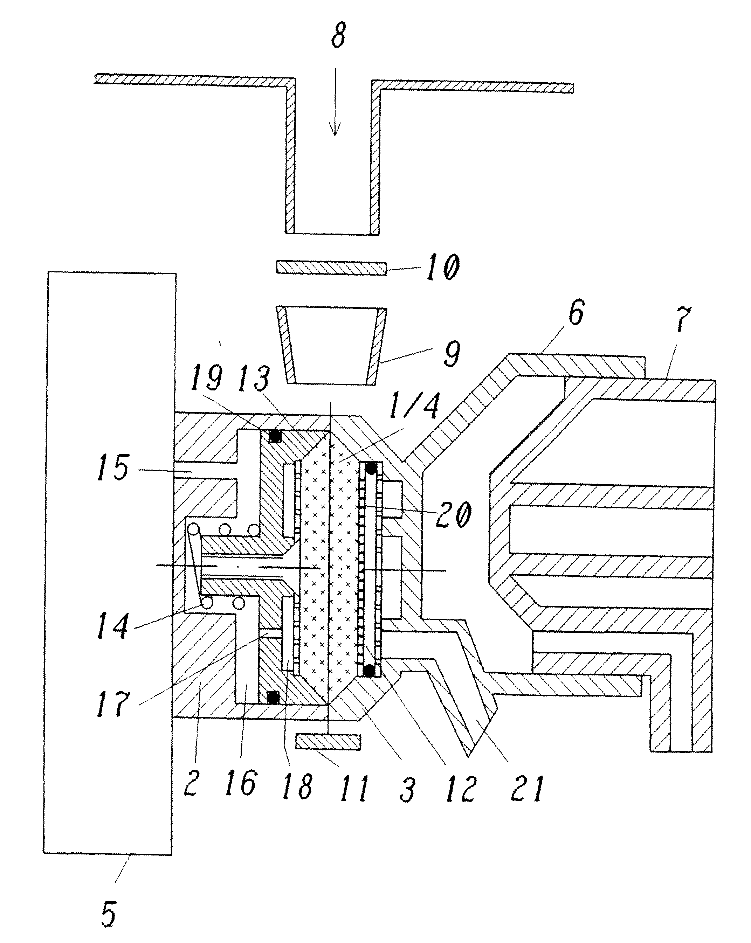

Unter Bezug auf die Zeichnung wird nachfolgend ein Ausführungsbeispiel der Erfindung erläutert.

### KURZE ERLÄUTERUNG DER FIGUREN

Die z.T. nur schematische Zeichnung zeigt in einer einzigen Figur im Schnitt den Brühkammerbereich einer Espressomaschine nach der Erfindung.

### WEGE ZUR AUSFÜHRUNG DER ERFINDUNG

In der Zeichnung bezeichnet 1 eine mit Kaffeepulver gefüllte Filterkapsel, welche in einer durch einen ersten Brühkammerteil 2 und einen zweiten Brühkammerteil 3 gebildeten Brühkammer 4 angeordnet ist. Ein umlaufender Rand der Filterkapsel 1 ist zwischen den Stirnflächen der beiden Brühkammerteile 2 und 3 eingeklemmt und ragt etwas über diese nach aussen hinaus.

Der erste Brühkammerteil 2 ist ortsfest angeordnet und mit einem zeichnerisch lediglich angedeuteten Brühwassererhitzer 5 verbunden. Der zweite Brühkammerteil 3 ist gegen den ersten Brühkammerteil 2 sowie gegen die Wirkung von zwei in der Zeichnung nicht erkennbaren Federn hydraulisch verfahrbar. Hierzu ist er mit einem Zylinder 6 verbunden, in welchem ein ortsfester Kolben 7 angeordnet ist. In der Zeichnung sind die beiden Brühkammerteile 2 und 3 in ihrer geschlossenen Stellung dargestellt, die sich ergibt, wenn der Raum zwischen dem Zylinder 6 und dem Kolben 7 mit Druck beaufschlagt ist. Der Druck wird erzeugt durch eine Druckpumpe (nicht dargestellt), welche auch als Brühwasserpumpe dient.

Im ersten Brühkammerteil 2 ist zur gleichmässigen Verteilung des Brühwassers eine Brausenplatte 12 vorhanden und zwar eingelassen in eine im ersten Brühkammerteil 2 axial bewegliche Brausenaufnahme 13. Die Brausenaufnahme 13 steht unter dem Druck einer Feder 14. Die Feder 14 drängt die Brausenaufnahme 13 in Richtung auf den zweiten Brühkammerteil 3 und drückt, wenn die Brühkammer 4 geschlossen ist, die Brausenplatte 12 gegen die Filterkapsel 1, wodurch diese komprimiert wird.

In die Brühkammer 4 gelangt die Filterkapsel 1, wie bereits erwähnt, bei geöffneten Brühkammerteilen 2 und 3 durch Einwerfen von oben durch einen Einwurfschlitz 8 und einen Einwurftrichter 9, wobei eine zur Abdeckung des Einwurfschlitzes 8 dienende Blende 10 kurzzeitig aus dem Bereich des Einwurfschlitzes 8 herausgeschwenkt wird. Auf Höhe der beiden Brühkammerteile 2 und 3 wird die Filterkapsel durch eine weitere schwenkbare Blende 11 aufgefangen.

Zur Kaffeezubereitung wird sodann die bereits erwähnte Druckpumpe in Gang gesetzt, welche zunächst kaltes Wasser aus einem Wasserbehälter (nicht dargestellt) ansaugt und in den Raum zwischen dem Kolben 6 und dem Kolben 7 pumpt. Hierdurch wird der zweite Brühkammerteil 3 gegen den ersten Brühkammerteil verfahren. Sobald die Brühkammer 4 geschlossen ist, wird das Wasser aus der Druckpumpe durch Betätigen eines Ventils (nicht dargestellt) in den Brühwassererhitzer 5 eingespeist. Aus diesem gelangt das Wasser, nunmehr erhitzt als Brühwasser, über wenigstens eine erste Öffnung 15 in einen variablen Zwischenraum 16 vor der beweglichen Brausenaufnahme 13 im ersten Brühkammerteil 2. Durch wenigstens eine zweite Öffnung 17 in der beweglichen Brausenaufnahme 13 fliesst es weiter in einen der Brausenplatte 12 vorgelagerten Verteilraum 18 und aus diesem durch die Brausenplatte 12 in die Brühkammer 4. Eine Dichtung 19 verhindert, dass das Brühwasser an der beweglichen Brausenausnahme 13 aussen vorbeiströmen kann. In der Brühkammer 4 durchsetzt das Brühwasser die Filterkapsel 1 mit dem Kaffeepulver und verlässt, nunmehr als Kaffee, die Brühkammer 4 über ein im zweiten Brühkammerteil 3 eingelassenes Filtersieb 20. Schliesslich strömt es über einen rohrförmigen Auslauf 21 in eine unterhalb von diesem bereitgestellte Tasse (nicht dargestellt).

Auf die mit der vorbeschriebenen Ausbildung erreichten Vorteile wurde bereits hingeweisen: Es sind dies vor allem eine Verbesserung der Kaffeequalität, die Möglichkeit, unterschiedlich dicke Filterkapseln zu verwenden und die Verhinderung einer Zerstörung der Filterkapseln bei einer Beaufschlagung mit heissem Dampf.

Gemäss einer bevorzugten Ausgestaltung ist der Strömungsquerschnitt für das Brühwasser in der wenigstens einen ersten Öffnung 15 zwischen dem Brühwassererhitzer 5 und dem variablen Zwischenraum 16 grösser gewählt als der Strömungsquerschnitt in der wenigstens einen zweiten Öffnung 17 zwischen dem variablen Zwischenraum 16 und dem Verteilraum 18. Hierdurch baut sich während der Kaffeezubereitung in dem variablen Zwischraum 11 ein hydraulischer Druck auf, welcher die Wirkung der Feder 14 unterstützt. Es wäre auch möglich, die Feder wegzulassen und den Druck auf die Brausenkonstruktion allein über diesen, sich dynamisch aufbauenden Druck aufzubringen.

Nach Beendigung des Brühvorgangs wird die Druckpumpe abgeschaltet, wodurch auch der Druck zwischen dem Zylinder 6 und dem Kolben 7 nachlässt und das dort vorhandene Wasser in den Wassebehälter zurückfliessen kann. Unter der Wirkung der erwähnten, nicht dargestellten Federn bewegt sich der zweite Brühkammerteil 3 unter Öffnung der Brühkammer 4 und Freigabe der Filterkapsel 1 von dem ersten Brühkammerteil 2 weg. Indem zuvor auch die weitere Blende 11 unter dem Brühkammerbereich weggeschwenkt wurde, kann die verbrauchte Filterkapsel 1 selbsttätig nach unten, beispielsweise in einen dort vorgesehenen Auffangbehälter (nicht dargestellt) fallen. Hiermit ist dann ein Kaffeezubereitungszyklus beendet.

## Patentansprüche

1. Espressomaschine, welche mit Filterkapseln (1) arbeitet und bei welcher eine Brüheinheit mit zwei relativ zueinander verfahrbaren Brühkammerteilen (2,3) vorgesehen ist, die in einer Schliessstellung eine Brühkammer (4) für die Filterkapseln (1) bilden, wobei einer der beiden Brühkammerteile (2) mit einem Brühwassererhitzer (5) verbunden und mit einer Brause (12,13) versehen ist und wobei die Brause (12,13) in dem ersten Brühkammerteil (2) beweglich und zumindest während der Kaffee zubereitung mit einer Kraft in Richtung des anderen Brühkammerteils (3) bzw. der in der Brühkammer aufgenommenen Filterkapsel (1) beaufschlagt ist, dadurch gekennzeichnet, dass die Brause (12,13) während der Kaffeezubereitung flächig an der Filterkapsel anliegt.

2. Espressomaschine nach Anspruch 1, dadurch gekennzeichnet, dass die auf die Brause (12,13) einwirkende Kraft wenigstens teilweise von einer Feder (14) aufgebracht wird.

3. Espressomaschine nach einem der Ansprüche 1 oder 2, dadurch gekennzeichnet, dass die Brühwasserzufuhr aus dem Brühwassererhitzer (5) zu der Brause (12,13) strömungstechnisch so ausgebildet ist, dass die auf die Brause (12,13) einwirkende Kraft wenigstens teilweise durch einen hydraulischen Druck aufgebracht wird, der sich während der Kaffeezubereitung in Strömungsrichtung vor der Brause (12,13) in dem genannten Brühkammerteil (2) ausbildet.

4. Espressomaschine nach einem der Ansprüche 1-3, dadurch gekennzeichnet, dass die Brause eine Brausenaufnahme (13) umfasst sowie eine in diese eingelassene Brausenplatte (12) und dass die Brausenaufnahme (13) gegenüber der Innenwand des genannten Brühkammerteils (2) so abgedichtet ist, dass das gesamte Brühwasser durch die Brausenplatte (12) zu strömen gezwungen ist.

5. Espressomaschine nach Anspruch 4, dadurch gekennzeichnet, dass in dem genannten Brühkammerteil (2) in Strömungsrichtung des Brühwassers vor der Brausenaufnahme (13) ein variabler Zwischenraum (16) und zwischen der Brausenaufnahme (13) und der Brausenplatte (12) ein Verteilraum (18) vorhanden ist.

6. Espressomaschine nach Anspruch 5, dadurch gekennzeichnet, dass der Strömungsquerschnitt für das Brühwasser zwischen dem Brühwassererhitzer (5) und dem Zwischenraum (16) grösser ist als der Strömungsquerschnitt zwischen dem Zwischenraum (16) und dem Verteilraum (18).

## Claims

1. Espresso machine which operates with filter capsules (1) and in which there is provided a brewing unit with two brewing-chamber parts (2, 3) which can be displaced relative to one another and, in a closed position, form a brewing chamber (4) for the filter capsules (1), one of the two brewing-chamber parts (2) being connected to a brewing-water heater (5) and being provided with a multiple nozzle (12, 13), and the multiple nozzle (12, 13) in the first brewing-chamber part (2) being movable and, at least while the coffee is being prepared, being forced in the direction of the other brewing-chamber part (3) or of the filter capsule (1) accommodated in the brewing chamber, characterized in that the multiple nozzle (12, 13) has its surface area butting against the filter capsule while the coffee is being prepared.

2. Espresso machine according to Claim 1, characterized in that at least some of the force acting on the multiple nozzle (12, 13) is exerted by a spring (14).

3. Espresso machine according to either of Claims 1 and 2, characterized in that, in terms of flow, the feed of the brewing water from the brewing-water heater (5) to the multiple nozzle (12, 13) is such that at least some of the force acting on the multiple nozzle (12, 13) is exerted by a hydraulic pressure which, while the coffee is being prepared, forms in said brewing-chamber part (2), upstream of the multiple nozzle (12, 13).

4. Espresso machine according to one of Claims 1-3, characterized in that the multiple nozzle comprises a multiple-nozzle mount (13) and a multiple-nozzle plate (12) which is positioned in the mount, and in that the multiple-nozzle mount (13) is sealed with respect to the inner wall of said brewing-chamber part (2) such that all the brewing water is forced to flow through the multiple-nozzle plate (12).

5. Espresso machine according to Claim 4, characterized in that provided in said brewing-chamber part (2), upstream of the multiple-nozzle mount (13), as seen in the direction in which the brewing water flows, is a variable interspace (16) and, between the multiple-nozzle mount (13) and the multiple-nozzle plate (12), a distributing space (18).

6. Espresso machine according to Claim 5, characterized in that the flow cross-section for the brewing water between the brewing-water heater (5) and the interspace (16) is greater than the flow cross-section between the interspace (16) and the distributing space (18).

## Revendications

1. Machine à café espresso utilisant des capsules filtrantes (1) et dans laquelle est prévue une unité d'infusion ayant deux parties (2, 3) de chambre d'infusion déplaçables l'une par rapport à l'autre, qui forment, dans une position de fermeture, une chambre d'infusion (4) pour les capsules filtrantes (1), l'une des deux parties (2) de la chambre d'infusion étant connectée à un réchauffeur d'eau d'infusion (5) et étant pourvue d'une buse multiple (12, 13) et dans laquelle la buse multiple (12, 13) est mobile dans la première partie (2) de la chambre d'infusion et est sollicitée au moins pendant la préparation du café avec une certaine force dans la direction de l'autre partie (3) de la chambre d'infusion ou de la capsule filtrante (1) reçue dans la chambre d'infusion, caractérisée en ce que la buse multiple (12, 13) repose à plat contre la capsule filtrante lors de la préparation du café.

2. Machine à café espresso selon la revendication 1, caractérisée en ce que la force agissant sur la buse multiple (12, 13) est exercée au moins partiellement par un ressort (14).

3. Machine à café espresso selon l'une quelconque des revendications 1 ou 2, caractérisée en ce que l'apport d'eau d'infusion du réchauffeur d'eau d'infusion (5) à la buse multiple (12, 13) est conçu, du point de vue de la technique d'écoulement, de telle sorte que la force s'exerçant sur la buse multiple (12, 13) soit exercée au moins partiellement par une pression hydraulique, qui se forme pendant la préparation du café dans ladite partie (2) de la chambre d'infusion dans la direction d'écoulement, en amont de la buse multiple (12, 13).

4. Machine à café espresso selon l'une quelconque des revendications 1 à 3, caractérisée en ce que la buse multiple comprend un logement (13) pour la buse multiple, ainsi qu'une plaque (12) pour la buse multiple introduite dans ce logement, et en ce que le logement (13) pour la buse multiple est rendu étanche par rapport à la paroi interne de ladite partie (2) de la chambre d'infusion, de telle sorte que l'eau d'infusion soit contrainte de s'écouler entièrement à travers la plaque (12) pour la buse multiple.

5. Machine à café espresso selon la revendication 4, caractérisée en ce que dans ladite partie (2) de la chambre d'infusion, dans le sens de l'écoulement de l'eau d'infusion en amont du logement (13) pour la buse multiple, est prévu un espace intermédiaire variable (16), et un espace de distribution (18) est prévu entre le logement (13) pour la buse multiple et la plaque (12) pour la buse multiple.

6. Machine à café espresso selon la revendication 5, caractérisée en ce que la section transversale d'écoulement pour l'eau d'infusion entre le réchauffeur d'eau d'infusion (5) et l'espace intermédiaire (16) est plus grande que la section transversale d'écoulement entre l'espace intermédiaire (16) et l'espace de distribution (18).
